(19) Europäisches Patentamt
European Patent Office
Office européen des brevets

(11) EP 4 160 970 B1

(12) **EUROPEAN PATENT SPECIFICATION**

(45) Date of publication and mention of the grant of the patent:
**23.09.2026 Bulletin 2026/39**

(21) Application number: **22198840.5**

(22) Date of filing: **29.09.2022**

(51) International Patent Classification (IPC):
***H04L 5/00*** *(2006.01)*

(52) Cooperative Patent Classification (CPC):
**H04L 5/0053; H04L 5/001; H04L 5/0057; H04L 5/0098;** H04L 5/0035

(54) **APPARATUS AND METHOD FOR UNKNOWN PUCCH SCELL ACTIVATION**

VORRICHTUNG UND VERFAHREN ZUR AKTIVIERUNG UNBEKANNTER PUCCH-SZELLEN

APPAREIL ET PROCÉDÉ D'ACTIVATION DE CELLULE SECONDAIRE PUCCH INCONNUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 US 202163250297 P**
**30.09.2021 US 202163250300 P**
**14.09.2022 US 202217945069**

(43) Date of publication of application:
**05.04.2023 Bulletin 2023/14**

(73) Proprietor: **MEDIATEK INC.**
**Hsinchu City 30078 (TW)**

(72) Inventors:
- **YANG, Chih-Kai**
  **Hsinchu City (TW)**
- **YU, Tsang-Wei**
  **Hsinchu City (TW)**
- **HSIEH, Chi-Hsuan**
  **Hsinchu City (TW)**
- **HUANG, Din-Hwa**
  **Hsinchu City (TW)**
- **CHENG, Ming-Yuan**
  **Hsinchu City (TW)**

(74) Representative: **Patentship Patentanwaltsgesellschaft mbH**
**Paul-Gerhardt-Allee 50**
**81245 München (DE)**

(56) References cited:
**US-A1- 2016 338 039**

- **VIVO: "On PUCCH SCell activation and deactivation", vol. RAN WG4, no. Electronic Meeting; 20210519 - 20210527, 11 May 2021 (2021-05-11), XP052008352, Retrieved from the Internet <URL:https://ftp.3gpp.org/tsg_ran/WG4_Radio/TSGR4_99-e/Docs/R4-2109617.zip R4-2109617 On PUCCH SCell activation and deactivation.doc> [retrieved on 20210511]**
- **MODERATOR (CATT): "Email discussion summary for [99-e][226] NR_RRM_enh2_3", vol. RAN WG4, no. Electronic Meeting; 20210519 - 20210527, 21 May 2021 (2021-05-21), XP052013159, Retrieved from the Internet <URL:https://ftp.3gpp.org/tsg_ran/WG4_Radio/TSGR4_99-e/Inbox/R4-2108150.zip R4-2108150 Summary_226_after_1st_round_v01.docx> [retrieved on 20210521]**
- **MODERATOR (CATT): "Email discussion summary for [99-e][226] NR_RRM_enh2_3", vol. RAN WG4, no. Electronic Meeting; 20210519 - 20210527, 27 May 2021 (2021-05-27), XP052016144, Retrieved from the Internet <URL:https://ftp.3gpp.org/tsg_ran/WG4_Radio/TSGR4_99-e/Docs/R4-2108398.zip R4-2108398 Summary_226_after_2nd_round_v00.docx> [retrieved on 20210527]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The disclosed embodiments relate generally to wireless communication, and, more particularly, to methods for unknown physical uplink control channel (PUCCH) secondary cell (SCell) activation.

BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3rd generation partner project (3GPP) network normally includes a hybrid of 2G/3G/4G systems. The next generation mobile network (NGMN) board has decided to focus the future NGMN activities on defining the end-to-end requirements for 5G new radio (NR) systems.

In conventional 5G technology, the network node may transmit an activation command for a physical uplink control channel (PUCCH) secondary cell (SCell) to the UE. However, the PUCCH SCell may be an unknown PUCCH SCell defined in 3GPP Technical Specification (TS) 38.133. The PUCCH SCell is unknown if one of following condition is met. (1) UE does not send a valid measurement report for the PUCCH SCell being activated before the UE receives the SCell activation command. (2) the SSB measured does not remain detectable before the UE receives the SCell activation command. (3)the SSB measured does not remain detectable during the SCell activation. The detectable conditions in the above conditions can refer to clause 9 in TS 38.133. For an unknown PUCCH SCell with valid timing advance (TA) or invalid TA case, the measurement report may not be transmitted successfully on the activating PUCCH SCell to the network. In that case, network cannot indicate the instructions for activation to the UE, e.g., downlink TCI state indication, uplink spatial relation indication, configuration of CSI reporting and PDCCH order for PRACH transmission. Eventually, the activation of unknown PUCCH SCell is failed.

Therefore, how can the unknown PUCCH SCell with valid TA or invalid TA be activated successfully is worthy of discussion.

Methods of PUCCH SCell activation and deactivation are disclosed in VIVO: "On PUCCH SCell activation and deactivation", 3GPP DRAFT, R4-2109617, 3GPP TSG-RAN WG4 Meeting #99-e, 19 - 27 May, 2021. Requirements of PUCCH SCell activation and deactivation are disclosed in Moderator (CATT): "Email discussion summary for [99-e] [226] NR_RRM_enh2_3", 3GPP DRAFT, R4-2108150, 3GPP TSG-RAN WG4 Meeting #99-e, 19 - 27 May, 2021. Requirements of PUCCH SCell activation and deactivation are disclosed in Moderator (CATT): "Email discussion summary for [99-e] [226] NR_RRM_enh2_3", 3GPP DRAFT, R4-2108398, 3GPP TSG-RAN WG4 Meeting #99-e, 19 - 27 May, 2021. US 2016/338039 A1 discloses method and system for handling of special SCell selection in dual connectivity, wherein a user equipment operating in dual connectivity mode in wireless communication networks is disclosed.

SUMMARY

The invention is set out in the appended set of claims.

A first aspect of the invention relates to a method, comprising: receiving, by a user equipment (UE), a physical uplink control channel (PUCCH) secondary cell (SCell) activation command for an unknown target PUCCH SCell from a network code; and transmitting, by the UE, a layer 1 (L1) report or a layer 3 (L3) report for the unknown target PUCCH SCell to the network node through an uplink channel on a special cell (SpCell) or an SCell before the unknown target PUCCH SCell is activated.

In a first embodiment of the first aspect, the uplink channel comprises at least one of a physical uplink shared channel (PUSCH) or a PUCCH.

In a second embodiment of the first aspect, the SpCell comprises at least one of a primary cell (PCell) and a primary secondary cell (PSCell).

In a third embodiment of the first aspect, the unknown target PUCCH SCell is associated with a valid timing advance (TA) or an invalid TA.

In a fourth embodiment of the first aspect in combination with the third embodiment of the first aspect, in an event that the unknown target PUCCH SCell is associated with the invalid TA, the method further comprises: receiving, by the UE, a PDCCH order from the network node; and transmitting, by the UE, information related to a physical random access channel (PRACH) transmission to another network node associated with the unknown target PUCCH SCell.

In a fifth embodiment of the first aspect, the unknown target PUCCH SCell is in a frequency range 1 (FR1) band or in a frequency range 2 (FR2) band.

In a sixth embodiment of the first aspect, the L1 report comprises L1-reference signal received power (L1-RSRP) measurement, L1-signal to interference plus noise ratio (L1-SINR) measurement, channel quality indicator (CQI), precoding matrix indicator (PMI), rank indicator (RI), or channel- state-information reference-signal (CSI-RS) resource indicator (CRI).

In a seventh embodiment of the first aspect, the L1 report comprises an aperiodic L1 report or a semi-persistent L1 report.

In an eighth embodiment of the first aspect, the L3 report comprises a L3-RSRP measurement report or a synchronization-signal SINR (SS-SINR) measurement report.

In a ninth embodiment of the first aspect, an activation time of the unknown target PUCCH SCell comprises a L3 RSRP delay.

A second aspect of the invention relates to a user equipment (UE), comprising: a receiver, receiving a physical uplink control channel (PUCCH) secondary cell (SCell) activation command for an unknown target PUCCH SCell from a network code; and a transmitter, transmitting a layer 1 (L1) report or a layer 3 (L3) report for the unknown target PUCCH SCell to the network node through an uplink channel on a special cell (SpCell) or an SCell before the unknown target PUCCH SCell is activated.

In a first embodiment of the second aspect, the uplink channel comprises at least one of a physical uplink shared channel (PUSCH) or a PUCCH.

In a second embodiment of the second aspect, the SpCell comprises at least one of a primary cell (PCell) or a primary secondary cell (PSCell).

In a third embodiment of the second aspect, the unknown target PUCCH SCell is associated with a valid timing advance (TA) or an invalid TA.

In a fourth embodiment of the second aspect in combination with the third embodiment of the second aspect, in an event that the unknown target PUCCH SCell is associated with the invalid TA, the receiver receives a PDCCH order from the network node and the transmitter transmits information related to a physical random access channel (PRACH) transmission to another network node associated with the unknown target PUCCH SCell.

In a fifth embodiment of the second aspect, the unknown target PUCCH SCell is in a frequency range 1 (FR1) band or in a frequency range 2 (FR2) band.

In a sixth embodiment of the second aspect, the L1 report comprises L1-reference signal received power (L1-RSRP) measurement, L1-signal to interference plus noise ratio (L1-SINR) measurement, channel quality indicator (CQI), precoding matrix indicator (PMI), rank indicator (RI), or channel- state-information reference-signal (CSI-RS) resource indicator (CRI).

In a seventh embodiment of the second aspect, the L1 report comprises an aperiodic L1 report or a semi-persistent L1 report.

In an eighth embodiment of the second aspect, the L3 report comprises a L3-RSRP measurement report or a synchronization-signal SINR (SS-SINR) measurement report.

In a ninth embodiment of the second aspect, an activation time of the unknown target PUCCH SCell comprises a L3 RSRP delay.

Apparatus and methods for unknown PUCCH SCell activation are proposed. The network node may transmit a PUCCH SCell activation command for an unknown target PUCCH SCell to the UE. After receiving the PUCCH SCell activation command for the unknown target PUCCH SCell, the UE may transmit a layer 1 (L1) report or a layer 3 (L3) report for the unknown target PUCCH SCell to the network node before the unknown target PUCCH SCell is activated. The network node may obtain the measurement information based on the L1 report or the L3 report before the unknown target PUCCH SCell is activated. Then, the network node may perform corresponding operations based on the L1 report or the L3 report before the unknown target PUCCH SCell is activated. Therefore, the unknown PUCCH SCell with valid TA or invalid TA can be activated successfully.

In one embodiment, a user equipment (UE) receives a physical uplink control channel (PUCCH) secondary cell (SCell) activation command for an unknown target PUCCH SCell from a network code. Then, the UE transmits a layer 1 (L1) report or a layer 3 (L3) report for the unknown target PUCCH SCell to the network node through an uplink channel on a special cell (SpCell) or a SCell before the unknown target PUCCH SCell is activated.

Other embodiments and advantages are described in the detailed description below. This summary does not purport to define the invention. The invention is defined by the claims.

## BRIEF DESCRIPTION OF THE DRAWINGS

The accompanying drawings, where like numerals indicate like components, illustrate embodiments of the invention.

Figure 1 is a simplified block diagram of a network node and a user equipment that carry out certain embodiments of the present invention.

Figure 2 is a flow chart of PUCCH SCell activation method for unknown PUCCH SCell with valid TA in accordance with one novel aspect.

Figure 3 is a flow chart of PUCCH SCell activation method for unknown PUCCH SCell with invalid TA in accordance with one novel aspect.

Figure 4 is a flow chart of PUCCH SCell activation method for unknown PUCCH SCell in accordance with one novel aspect.

DETAILED DESCRIPTION

Reference will now be made in detail to some embodiments of the invention, examples of which are illustrated in the accompanying drawings.

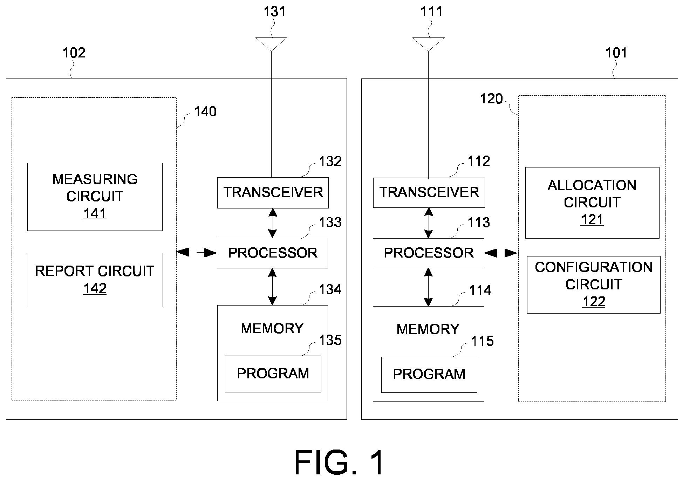

Figure 1 is a simplified block diagram of a network node and a user equipment (UE) that carry out certain embodiments of the present invention. The network node 101 may be a base station (BS) or a gNB, but the present invention should not be limited thereto. The UE 102 may be a smart phone, a wearable device, an Internet of Things (IoT) device, and a tablet, etc. Alternatively, UE 102 may be a Notebook (NB) or Personal Computer (PC) inserted or installed with a data card which includes a modem and RF transceiver(s) to provide the functionality of wireless communication.

Network node 101 has an antenna array 111 having multiple antenna elements that transmits and receives radio signals, one or more RF transceiver modules 112, coupled with the antenna array 111, receives RF signals from antenna array 111, converts them to baseband signal, and sends them to processor 113. RF transceiver 112 also converts received baseband signals from processor 113, converts them to RF signals, and sends out to antenna array 111. Processor 113 processes the received baseband signals and invokes different functional modules and circuits 120 to perform features in network node 101. Memory 114 stores program instructions and data 115 to control the operations of network node 101. Network node 101 also includes multiple function modules that carry out different tasks in accordance with embodiments of the current invention.

Similarly, UE 102 has an antenna array 131, which transmits and receives radio signals. A RF transceiver 132, coupled with the antenna, receives RF signals from antenna array 131, converts them to baseband signals and sends them to processor 133. RF transceiver 132 also converts received baseband signals from processor 133, converts them to RF signals, and sends out to antenna array 131. Processor 133 processes the received baseband signals and invokes different functional modules and circuits 140 to perform features in UE 102. Memory 134 stores program instructions and data 135 to control the operations of UE 102. UE 102 also includes multiple function modules and circuits that carry out different tasks in accordance with embodiments of the current invention.

The functional modules and circuits 120 and 140 can be implemented and configured by hardware, firmware, software, and any combination thereof. The function modules and circuits 120 and 140, when executed by the processors 113 and 133 (e.g., via executing program codes 115 and 135), allow network node 101 and UE 102 to perform embodiments of the present invention.

In the example of Figure 1, the network node 101 may comprise an allocation circuit 121 and a configuration circuit 122. Allocation circuit 121 may generate a physical uplink control channel (PUCCH) secondary cell (SCell) activation command for a target PUCCH SCell. Configuration circuit 122 may transmit the PUCCH SCell activation command to the UE 102.

In the example of Figure 1, the UE 102 may comprise a measuring circuit 141 and a report circuit 142. measuring circuit 141 may perform measurements based on the configurations from the network node 101 or other network nodes. Report circuit 142 may transmit a layer 1 (L1) report or a layer 3 (L3) report for an unknown target PUCCH SCell to the network node 101 based on the measurement results for the unknown target PUCCH SCell from the measuring circuit 141.

In accordance with one novel aspect, when the UE 102 receives a PUCCH SCell activation command for an unknown target PUCCH SCell from the network node 101, the UE 102 may transmit a L1 report or a L3 report for the unknown target PUCCH SCell to the network node 101 through an uplink channel on a special cell (SpCell) or a SCell before the unknown target PUCCH SCell is activated. Then, the network node 101 may indicate at least one of following instructions, downlink transmission control information (TCI) indicator, uplink spatial relation indication, channel state information (CSI) resource configuration, CSI reporting configuration and PDCCH order for physical random access channel (PRACH) transmission, based on the L1 report or the L3 report before the unknown target PUCCH SCell is activated. The SpCell may comprise at least one of a primary cell (PCell) and a primary secondary cell (PSCell). The unknown target PUCCH SCell may be in a frequency range 1 (FR1) band or in a frequency range 2 (FR2) band.

In accordance with one novel aspect, the unknown target PUCCH SCell may belong to a PUCCH group (e.g., a secondary PUCCH group). The L1 report or L3 report may be transmitted through an active serving cell within a PUCCH group which is different from the PUCCH group associated with the unknown target PUCCH SCell. In an example, if the unknown target PUCCH SCell belongs to a PUCCH group, the UE 102 may transmit a L1 report or a L3 report for the

unknown target PUCCH SCell to the network node 101 through an uplink channel on a special cell (SpCell) or a SCell which belongs to another PUCCH group before the unknown target PUCCH SCell is activated. That is, the UE 102 may have capability of transmitting report (e.g., channel state information (CSI) report, L1 report or a L3 report) cross PUCCH group.

The uplink channel may comprise at least one of a physical uplink shared channel (PUSCH) or a PUCCH. In an example, the UE 102 may transmit a L1 report for the unknown target PUCCH SCell through a PUCCH on a SpCell before the unknown target PUCCH SCell is activated. In another example, the UE 102 may transmit a L1 report for the unknown target PUCCH SCell through a PUSCH on a SpCell or a SCell before the unknown target PUCCH SCell is activated. In another example, the UE 102 may transmit a L3 report for the unknown target PUCCH SCell through a PUSCH on a SpCell or a SCell before the unknown target PUCCH SCell is activated.

In an example, the L1 report may comprise L1-reference signal received power (L1-RSRP) measurement, L1-signal to interference plus noise ratio (L1-SINR) measurement, channel quality indicator (CQI), precoding matrix indicator (PMI), rank indicator (RI), or channel- state-information reference-signal (CSI-RS) resource indicator (CRI). The L1 report may be an aperiodic L1 report or a semi-persistent L1 report.

In an example, the L3 report may comprise a L3-RSRP measurement report or a synchronization-signal SINR (SS-SINR) measurement report.

The unknown target PUCCH SCell may be associated with a valid timing advance (TA) or an invalid TA. In an example, when the unknown target PUCCH SCell is associated with the invalid TA, after the UE 102 transmits the L1 report or the L3 report for the unknown target PUCCH SCell to the network node 101, the UE 102 may receive a PDCCH order from the network node 101. Then, the UE 102 may transmit information related to a physical random access channel (PRACH) transmission to another network node associated with the unknown target PUCCH SCell.

In an embodiment, the unknown target PUCCH SCell is associated with the valid TA and belongs to FR1. When the UE 102 receives the PUCCH SCell activation command for the unknown target PUCCH SCell from the network node 101 in slot n, the unknown target PUCCH SCell is activated no later than in slot $\mathrm{n} + \frac{T_{HARQ}+T_{activation_time}+T_{CSI_Reporting}}{slot\ length}$. $T_{HARQ}$ is the timing between downlink (DL) data transmission and acknowledgement. $T_{CSI_Reporting}$ is the delay including uncertainty in acquiring the first available downlink CSI reference resource. $T_{activation_time}$ is the activation time for the unknown target PUCCH SCell. In the embodiment, the side condition $\hat{E}s/Iot \geq -2dB$ is fulfilled.

In the embodiment, if the UE 102 transmits the L1 report for the unknown target PUCCH SCell through a PUCCH on a SpCell or through a PUSCH on a SpCell or a SCell before the unknown target PUCCH SCell is activated, the $T_{activation_time}$ is defined as follow:

6ms+ $T_{\mathrm{FirstSSB_MAX}}$ + $\mathrm{T}_{\mathrm{SMTC_MAX}}$ + $T_{\mathrm{rs}}$ + $\mathrm{T}_{\mathrm{L1\text{-}RSRP,measure}}$ + $T_{\mathrm{L1\text{-}RSRP,report}}$ + $T_{\mathrm{HARQ}}$ + max($T_{\mathrm{uncertainty_MAC}}$+$T_{\mathrm{FineTiming}}$ +2ms, $T_{\mathrm{uncertainty_SP}}$), if semi-persistent CSI-RS is used for CSI reporting, or

3ms+$T_{\mathrm{FirstSSB_MAX}}$+$T_{\mathrm{SMTC_MAX}}$+$T_{\mathrm{rs}}$+$T_{\mathrm{L1\text{-}RSRP,measure}}$+$T_{\mathrm{L1\text{-}RSRP,report}}$+ max($T_{\mathrm{HARQ}}$+$T_{\mathrm{uncertainty_Mac}}$+5ms+$T_{\mathrm{FineTiming}}$, $T_{\mathrm{uncertainty_RRC}}$ +$T_{\mathrm{RRC_delay}}$), if periodic CSI-RS is used for CSI reporting. $T_{\mathrm{FirstSSB_MAX}}$ is the time to the end of the first complete synchronization signal/PBCH block (SSB) burst indicated by the SSB measurement timing configuration (SMTC) after slot $\mathrm{n}+\frac{T_{HARQ}+3ms}{slot\ length}$. $T_{\mathrm{SMTC_MAX}}$ is the longer SMTC periodicity between active serving cells and SCell being activated in case of intra-band SCell activation or the SMTC periodicity of SCell being activated in case of inter-band SCell activation. $T_{\mathrm{rs}}$ is the SMTC periodicity of SCell being activated or set to 5ms. $T_{\mathrm{L1\text{-}RSRP,measure}}$ is a L1-RSRP measurement delay. $T_{\mathrm{L1\text{-}RSRP,report}}$ is a delay of acquiring CSI reporting resources. $T_{\mathrm{uncertainty_MAC}}$ is the time period between reception of the last activation command. $T_{\mathrm{FineTiming}}$ is the time period between UE finish processing the last activation command. $T_{\mathrm{uncertainty_SP}}$ is the time period between reception of the activation command for semi-persistent CSI-RS resource set for CQI reporting. $T_{\mathrm{uncertainty_RRC}}$ is the time period between reception of the RRC configuration message for TCI of periodic CSI-RS for CQI reporting. $T_{\mathrm{RRC_delay}}$ is the RRC procedure delay. Details for the above parameters are defined in 3GPP TS 38.213 and TS38.331.

In the embodiment, if the UE 102 transmits the L3 report for the unknown target PUCCH SCell through a PUSCH on a SpCell or a SCell before the unknown target PUCCH SCell is activated, the $T_{activation_time}$ is defined as follow:

6ms+$T_{\mathrm{FirstSSB_MAX}}$+$T_{\mathrm{SMTC_MAX}}$+$T_{rs}$+$T_{\mathrm{L3\text{-}RSRP}}$+$T_{HARQ}$+max($T_{\mathrm{uncertainty_MAC}}$+$T_{\mathrm{FineTiming}}$+ 2ms, $T_{\mathrm{uncertainty_SP}}$), if semi-persistent CSI-RS is used for CSI reporting, and

3ms+$T_{\mathrm{FirstSSB_MAX}}$+$T_{\mathrm{SMTC_MAX}}$+$T_{\mathrm{rs}}$+$T_{\mathrm{L3\text{-}RSRP}}$+max($T_{\mathrm{HARQ}}$+$T_{\mathrm{uncertainty_MAC}}$+5ms+ $T_{\mathrm{FineTiming}}$, $T_{\mathrm{uncertainty_RRC}}$ +$T_{\mathrm{RRC\text{-}delay}}$), if periodic CSI-RS is used for CSI reporting. $T_{\mathrm{L3\text{-}RSRP}}$ is the $T_{\mathrm{identify\ intra\ without\ index}}$ or $T_{\mathrm{identify\ intra\ with\ index}}$ defined in clause 9.2 in 3GPP TS 38.133.

In another embodiment, the unknown target PUCCH SCell is associated with the invalid TA and belongs to FR1. When the UE 102 receives the PUCCH SCell activation command for the unknown target PUCCH SCell from the network node 101 in slot n, the unknown target PUCCH SCell is activated no later than in slot $n + \frac{T_{HARQ}+T_{activation_time}+T_{CSI_Reporting}}{slot\ length}+T1+T2+T3$ . $T_{HARQ}$ is the timing between downlink (DL) data transmission and acknowledgement. $T_{CSI_Reporting}$ is the delay including uncertainty in acquiring the first available downlink CSI reference resource. $T_{activation_time}$ is the activation time for the unknown target PUCCH SCell. T1 is the delay uncertainty in acquiring the first available PRACH occasion in the PUCCH SCell. T2 is the delay for obtaining a valid TA command for the secondary timing-advance group (sTAG) to which the SCell configured with PUCCH belongs. T3 is the delay for applying the received TA for uplink transmission. In the embodiment, the side condition $\hat{E}s|Iot \geq -2dB$ is fulfilled.

In the embodiment, if the UE 102 transmits the L1 report for the unknown target PUCCH SCell through a PUCCH on a SpCell or through a PUSCH on a SpCell or a SCell before the unknown target PUCCH SCell is activated, the $T_{activation_time}$ is defined as follow:

$6ms+ T_{FirstSSB_MAX} + T_{SMTC_MAX} + T_{rs} + T_{L1\text{-}RSRP,measure} + T_{L1\text{-}RSRP,report} + T_{HARQ} + \max(T_{uncertainty_MAC}+T_{FineTiming} +2ms, T_{uncertainty_SP})$,

if semi-persistent CSI-RS is used for CSI reporting, and

$3ms + T_{FirstSSB_MAX}+T_{SMTC_MAX}+T_{rs}+T_{L1\text{-}RSRP,measure}+T_{L1\text{-}RSRP,report}+ \max(T_{HARQ}+T_{uncertainty_MAC}+5ms+T_{FineTiming}, T_{uncertainty_RRC}+T_{RRC_delay})$,

if periodic CSI-RS is used for CSI reporting.

In the embodiment, if the UE 102 transmits the L3 report for the unknown target PUCCH SCell through a PUSCH on a SpCell or a SCell before the unknown target PUCCH SCell is activated, the $T_{activation_time}$ is defined as follow:

$6ms+T_{FirstSSB_MAX}+T_{SMTC_MAX}+T_{rs}+T_{L3\text{-}RSRP}+T_{HARQ}+\max(T_{uncertainty_MAC}+T_{FineTiming} +2ms, T_{uncertainty_SP})$,

if semi-persistent CSI-RS is used for CSI reporting, and

$3ms+T_{FirstSSB_MAX}+T_{SMTC_MAX}+T_{rs}+T_{L3\text{-}RSRP}+\max(T_{HARQ}+T_{uncertainty_MAC}+5ms+ T_{FineTiming}, T_{uncertainty_RRC}+T_{RRC_delay})$, if periodic CSI-RS is used for CSI reporting. $T_{L3\text{-}RSRP}$ is a L3 RSRP delay, e.g., the $T_{identify\ intra\ without\ index}$ or $T_{identify\ intra\ with\ index}$ defined in clause 9.2 in 3GPP TS 38.133.

In another embodiment, the unknown target PUCCH SCell is associated with the valid TA and belongs to FR2. When the UE 102 receives the PUCCH SCell activation command for the unknown target PUCCH SCell from the network node 101 in slot n, the unknown target PUCCH SCell is activated no later than in slot $n + \frac{T_{HARQ}+T_{activation_time}+T_{CSI_Reporting}}{slot\ length}$. . $T_{HARQ}$ is the timing between downlink (DL) data transmission and acknowledgement. $T_{CSI_Reporting}$ is the delay including uncertainty in acquiring the first available downlink CSI reference resource. $T_{activation_time}$ is the activation time for the unknown target PUCCH SCell. In the embodiment, the side condition $\hat{E}s/Iot \geq -2dB$ is fulfilled.

In the embodiment, if the UE 102 transmits the L1 report for the unknown target PUCCH SCell through a PUCCH on a SpCell or through a PUSCH on a SpCell or a SCell before the unknown target PUCCH SCell is activated, the $T_{activation_time}$ is defined as follow:

$6ms+T_{FirstSSB_MAX}+15*T_{SMTC_MAX}+8*T_{rs}+T_{L1\text{-}RSRP,measure}+\boldsymbol{T}_{L1\text{-}RSRP,report}+T_{HARQ}+\max(T_{uncertainty\text{-}MAC}+T_{FineTiming} +2ms, T_{uncertainty_SP})$,

if semi-persistent CSI-RS is used for CSI reporting, and

$3ms+T_{FirstSSB_MAX}+15*T_{SMTC_MAX}+8*T_{rs}+T_{L1\text{-}RSRP,measure}+T_{L1\text{-}RSRP,report}+ \max(T_{HARQ}+T_{uncertainty_MAC}+5ms+T_{FineTiming}, T_{uncertainty_RRC}+T_{RRC_delay})$,

if periodic CSI-RS is used for CSI reporting.

In the embodiment, if the UE 102 transmits the L3 report for the unknown target PUCCH SCell through a PUSCH on a SpCell or a SCell before the unknown target PUCCH SCell is activated, the $T_{activation_time}$ is defined as follow:

6ms+$T_{FirstSSB_MAX}$+15*$T_{MTC_MAX}$+8*$T_{rs}$+$T_{L3-RSRP}$+$T_{HARQ}$+max ($T_{uncertainty_MAC}$+ $T_{FineTiming}$+2ms, $T_{uncertainty_SP}$),

if semi-persistent CSI-RS is used for CSI reporting, and 3ms+$T_{FirstSSB_MAX}$+15*$T_{SMTC-MAX}$+8*$T_{rs}$+$T_{L3-RSRP}$+max($T_{HARQ}$+$T_{uncertainty_MAC}$+5MS +i$_{TFineTiming}$, $T_{uncertainty_RRC}$ +$T_{RRC_delay}$), if periodic CSI-RS is used for CSI reporting. $T_{L3-RSRP}$ is a L3 RSRP delay, e.g., the $T_{identify\ intra\ without\ index}$ or $T_{identify\ intra\ with\ index}$ defined in clause 9.2 in 3GPP TS 38.133.

In another embodiment, the unknown target PUCCH SCell is associated with the invalid TA and belongs to FR2. When the UE 102 receives the PUCCH SCell activation command for the unknown target PUCCH SCell from the network node 101 in slot n, the unknown target PUCCH SCell is activated no later than in slot $n + \frac{T_{HARQ}+T_{activation_time}+T_{CSI_Reporting}}{slot\ length}+T1+T2+T3$. $T_{HARQ}$ is the timing between downlink (DL) data transmission and acknowledgement. $T_{CSI_Reporting}$ is the delay including uncertainty in acquiring the first available downlink CSI reference resource. $T_{activation_time}$ is the activation time for the unknown target PUCCH SCell. T1 is the delay uncertainty in acquiring the first available PRACH occasion in the PUCCH SCell. T2 is the delay for obtaining a valid TA command for the secondary timing-advance group (sTAG) to which the SCell configured with PUCCH belongs. T3 is the delay for applying the received TA for uplink transmission. In the embodiment, the side condition $\hat{E}s/Iot \geq -2dB$ is fulfilled.

In the embodiment, if the UE 102 transmits the L1 report for the unknown target PUCCH SCell through a PUCCH on a SpCell or through a PUSCH on a SpCell or a SCell before the unknown target PUCCH SCell is activated, the $T_{activation_time}$ is defined as follow:

6ms+$T_{FirstSSB_MAX}$+15*$T_{SMTC_MAX}$+8*$T_{rs}$+$T_{L1-RSRP,measure}$+$T_{L1-RSRP,report}$+$T_{HARQ}$+m ax($T_{uncertainty-MAC}$+$T_{FineTiming}$ +2ms, $T_{uncertainty_SP}$),

if semi-persistent CSI-RS is used for CSI reporting, and

3ms+ $T_{FirstSSB_MAX}$+15*$T_{SMTC_MAX}$+8*$T_{rs}$+$T_{L1-RSRP,measure}$+$T_{L1-RSRP,report}$+ max($T_{HARQ}$+$T_{uncertainty_MAC}$+5ms+$T_{Fine-Timing}$, $T_{uncertainty_RRC}$+$T_{RRC_delay}$),

if periodic CSI-RS is used for CSI reporting.

In the embodiment, if the UE 102 transmits the L3 report for the unknown target PUCCH SCell through a PUSCH on a SpCell or a SCell before the unknown target PUCCH SCell is activated, the $T_{activation_time}$ is defined as follow:

6ms+$T_{FirstSSB_MAX}$+15*$T_{SMTC-MAX}$+8*$T_{rs}$+$T_{L3-RSRP}$+$T_{HARQ}$+max($T_{uncertainty_MAC}$+ $T_{FineTiming}$+2ms, $T_{uncertainty_SP}$), if semi-persistent CSI-RS is used for CSI reporting, and

3ms+$T_{FirstSS_MAX}$+15*$T_{SMTC_MAX}$+8*$T_{rs}$+$T_{L3-RSRP}$+max($T_{HARQ}$+$T_{uncertainty_MAC}$+5MS +$T_{FineTiming}$, $T_{uncertainty_RRC}$ +$T_{RRC_delay}$), if periodic CSI-RS is used for CSI reporting. $T_{L3-RSRP}$ is a L3 RSRP delay, e.g., the $T_{identify\ intra\ without\ index}$ or $T_{identify\ intra\ with\ index}$ defined in clause 9.2 in 3GPP TS 38.133.

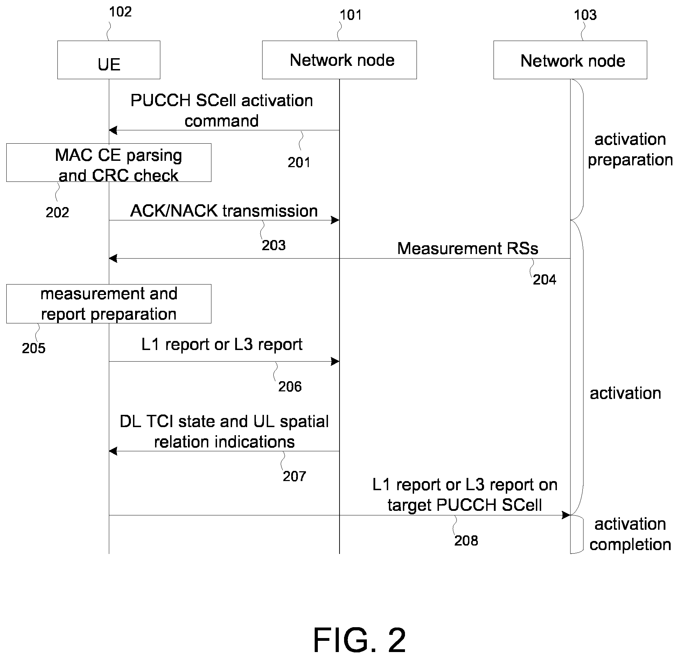

Figure 2 is a flow chart of PUCCH SCell activation method for unknown PUCCH SCell with valid TA in accordance with one novel aspect. In the present invention, the unknown PUCCH SCell belongs to a secondary PUCCH group.

In step 201, the UE 102 may receive a PUCCH SCell activation command for an unknown target PUCCH SCell from the network 101 through a primary cell (PCell).

In step 202, the UE 102 may perform medium-access control control-element (MAC CE) parsing and cyclic redundancy check (CRC) check.

In step 203, the UE 102 may transmit ACK/NACK signal to the network node 101.

In step 204, the network node 103 associated with the unknown target PUCCH SCell may transmit measurement reference signals (RSs) for the unknown target PUCCH SCell to the UE 102.

In step 205, the UE 102 may perform measurement based on the measurement RSs to generate the L1 report or L3 report for the unknown target PUCCH SCell.

In step 206, the UE 102 may transmit the L1 report or L3 report for the unknown target PUCCH SCell to the network node 101.

In step 207, the network node 101 may transmit the downlink (DL) transmission configuration indicator (TCI) state and uplink (UL) spatial relation indicators to the UE 102 based on the L1 report or L3 report for the unknown target PUCCH SCell. From step 204 to step 207, during the activation procedure for the unknown target PUCCH SCell, the unknown target PUCCH SCell has not been activated completely.

In step 208, the unknown target PUCCH SCell activation has been completed, and the UE 102 may transmit the

L1 report or L3 report for the unknown target PUCCH SCell to the network node 103 through the unknown target PUCCH SCell.

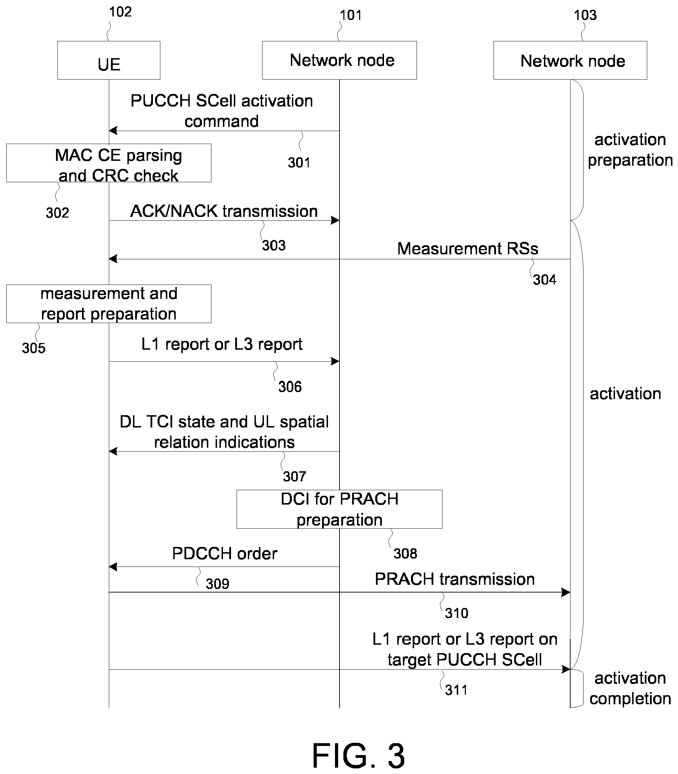

Figure 3 is a flow chart of PUCCH SCell activation method for unknown PUCCH SCell with invalid TA in accordance with one novel aspect. In the present invention, the unknown PUCCH SCell belongs to a secondary PUCCH group.

In step 301, the UE 102 may receive a PUCCH SCell activation command for an unknown target PUCCH SCell from the network 101 through a primary cell (PCell).

In step 302, the UE 102 may perform medium-access control control-element (MAC CE) parsing and cyclic redundancy check (CRC) check.

In step 303, the UE 102 may transmit ACK/NACK signal to the network node 101.

In step 304, the network node 103 associated with the unknown target PUCCH SCell may transmit measurement reference signals (RSs) for the unknown target PUCCH SCell to the UE 102.

In step 305, the UE 102 may perform measurement based on the measurement RSs to generate the L1 report or L3 report for the unknown target PUCCH SCell.

In step 306, the UE 102 may transmit the L1 report or L3 report for the unknown target PUCCH SCell to the network node 101.

In step 307, the network node 101 may transmit the downlink (DL) transmission configuration indicator (TCI) state and uplink (UL) spatial relation indicators to the UE 102 based on the L1 report or L3 report for the unknown target PUCCH SCell.

In step 308, the network node 101 may generate the downlink control information (DCI) for a physical random access channel (PRACH) transmission.

In step 309, the network node 101 may transmit a PDCCH order to the UE 102.

In step 310, the UE 102 may transmit information related to the PRACH transmission to the network node 103 associated with the unknown target PUCCH SCell. From step 304 to step 310, during the activation procedure for the unknown target PUCCH SCell, the unknown target PUCCH SCell has not been activated completely.

In step 311, the unknown target PUCCH SCell activation has been completed, and the UE 102 may transmit the L1 report or L3 report for the unknown target PUCCH SCell to the network node 103 through the unknown target PUCCH SCell.

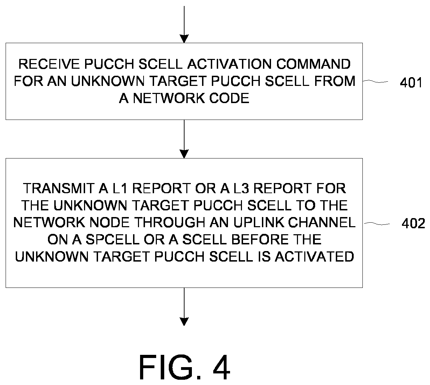

Figure 4 is a flow chart of PUCCH SCell activation method for unknown PUCCH SCell in accordance with one novel aspect. In step 401, a UE receives a physical uplink control channel (PUCCH) secondary cell (SCell) activation command for an unknown target PUCCH SCell from a network code.

In step 402, the UE transmits a layer 1 (L1) report or a layer 3 (L3) report for the unknown target PUCCH SCell to the network node through an uplink channel on a special cell (SpCell) or a SCell before the unknown target PUCCH SCell is activated.

In activation method for unknown PUCCH SCell, the uplink channel may comprise at least one of a physical uplink shared channel (PUSCH) or a PUCCH.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

**1.** A method, comprising:

receiving (201, 301), by a user equipment (102), UE, a physical uplink control channel, PUCCH, secondary cell, SCell, activation command for an unknown PUCCH SCell from a network node (101);
receiving (204, 304), by the UE (102), measurement reference signals, RSs, for the unknown target PUCCH SCell from another network node (103) associated with the unknown target PUCCH SCell, and performing (205, 305) measurement based on the measurement RSs to generate a layer 1, L1, report or a layer 3, L3, report for the unknown target PUCCH SCell;
transmitting (206, 306), by the UE (102), the L1 report or the L3 report for the unknown PUCCH SCell to the network node (101) through an uplink channel on a special cell, SpCell, or on an SCell, before the unknown PUCCH SCell is activated; and
transmitting (208, 311), by the UE (102), the L1 report or the L3 report for the unknown target PUCCH SCell to the another network node (103) associated with the unknown target PUCCH SCell through the unknown target PUCCH SCell,

wherein the SpCell comprises at least one of a primary cell, PCell, and a primary secondary cell, PSCell.

**2.** The method of Claim 1, wherein the uplink channel comprises at least one of a physical uplink shared channel, PUSCH, or a PUCCH.

**3.** The method of Claim 1, wherein the unknown PUCCH SCell is associated with a valid timing advance, TA, or an invalid TA.

**4.** The method of Claim 3, wherein in an event that the unknown PUCCH SCell is associated with the invalid TA, the method further comprises:

receiving, by the UE (102), a PDCCH order from the network node (101); and
transmitting, by the UE (102), information related to a physical random access channel, PRACH, transmission to the another network node (103) associated with the unknown PUCCH SCell.

**5.** The method of Claim 1, wherein the unknown PUCCH SCell is in a frequency range 1, FR1, band or in a frequency range 2, FR2, band.

**6.** The method of Claim 1, wherein if the L1 report is transmitted, the L1 report comprises L1-reference signal received power, L1-RSRP, measurement, L1-signal to interference plus noise ratio, L1-SINR, measurement, channel quality indicator, CQI, precoding matrix indicator, PMI, rank indicator, RI, or channel- state-information reference-signal, CSI-RS, resource indicator, CRI; or wherein the L1 report comprises an aperiodic L1 report or a semi-persistent L1 report.

**7.** The method of Claim **1,** wherein if the L3 report is transmitted, the L3 report comprises a L3-RSRP measurement report or a synchronization-signal SINR, SS-SINR, measurement report; or wherein an activation time of the unknown PUCCH SCell comprises a L3 RSRP delay.

**8.** A user equipment (102), UE, comprising:

a receiver (132), receiving a physical uplink control channel, PUCCH, secondary cell, SCell, activation command for an unknown PUCCH SCell from a network node (101), and receiving measurement reference signals, RSs, for the unknown target PUCCH SCell from another network node (103) associated with the unknown target PUCCH SCell;
a measuring circuit (141), performing (205, 305) measurement based on the measurement RSs to generate a layer 1, L1, report or a layer 3, L3, report for the unknown target PUCCH SCell; and
a transmitter (132), transmitting the L1 report or the L3 report for the unknown PUCCH SCell to the network node (101) through an uplink channel on a special cell, SpCell, or an SCell before the unknown PUCCH SCell is activated, and transmitting the L1 report or the L3 report for the unknown target PUCCH SCell to the another network node (103) associated with the unknown target PUCCH SCell through the unknown target PUCCH SCell,
wherein the SpCell comprises at least one of a primary cell, PCell, and a primary secondary cell, PSCell.

**9.** The UE (102) of Claim 8, wherein the uplink channel comprises at least one of a physical uplink shared channel, PUSCH, or a PUCCH.

**10.** The UE (102) of Claim 8, wherein the unknown PUCCH SCell is in a frequency range 1, FR1, band or in a frequency range 2, FR2, band.

**11.** The (102) UE of Claim 8, wherein the unknown PUCCH SCell is associated with a valid timing advance, TA, or an invalid TA.

**12.** The UE (102) of Claim 11, wherein in an event that the unknown PUCCH SCell is associated with the invalid TA, the receiver (132) receives a PDCCH order from the network node (101) and the transmitter (132) transmits information related to a physical random access channel, PRACH, transmission to the another network node (103) associated with the unknown PUCCH SCell.

**13.** The UE (102) of Claim 8, wherein if the L1 report is transmitted, the L1 report comprises L1-reference signal received power, L1-RSRP, measurement, L1-signal to interference plus noise ratio, L1-SINR, measurement, channel quality indicator, CQI, precoding matrix indicator, PMI, rank indicator, RI, or channel-state-information reference-signal, CSI-

RS, resource indicator, CRI; or wherein the L1 report comprises an aperiodic L1 report or a semi-persistent L1 report.

**14.** The UE (102) of Claim 8, wherein if the L3 report is transmitted, the L3 report comprises a L3-RSRP measurement report or a synchronization-signal SINR, SS-SINR, measurement report; or wherein an activation time of the unknown PUCCH SCell comprises a L3 RSRP delay.

## Patentansprüche

**1.** Ein Verfahren, umfassend:

Empfangen (201, 301), durch ein Benutzergerät (102), UE, eines Aktivierungsbefehls für eine physische Uplink-Steuerkanal-, PUCCH-, sekundäre Zelle, SZelle, für eine unbekannte PUCCH-SZelle von einem Netzwerkknoten (101);
Empfangen (204, 304), durch das UE (102), von Messreferenzsignalen, RSs, für die unbekannte Ziel-PUCCH-SZelle von einem anderen Netzwerkknoten (103), der der unbekannten Ziel-PUCCH-SZelle zugeordnet ist, und Durchführen (205, 305) einer Messung basierend auf den Mess-RSs, um einen Layer-1-, L1-, Bericht oder einen Layer-3-, L3-, Bericht für die unbekannte Ziel-PUCCH-SZelle zu erzeugen;
Übertragen (206, 306), durch das UE (102), des L1-Berichts oder des L3-Berichts für die unbekannte PUCCH-SZelle an den Netzwerkknoten (101) durch einen Uplink-Kanal auf einer speziellen Zelle, SpZelle, oder auf einer SZelle, bevor die unbekannte PUCCH-SZelle aktiviert wird; und
Übertragen (208, 311), durch das UE (102), des L1-Berichts oder des L3-Berichts für die unbekannte Ziel-PUCCH-SZelle an den anderen Netzwerkknoten (103), der der unbekannten Ziel-PUCCH-SZelle zugeordnet ist, durch die unbekannte Ziel-PUCCH-SZelle,
wobei die SpZelle mindestens eines von einer primären Zelle, PZelle, und einer primären sekundären Zelle, PSZelle, umfasst.

**2.** Das Verfahren nach Anspruch 1, wobei der Uplink-Kanal mindestens eines von einem geteilt genutzten physischen Uplink-Kanal, PUSCH, oder einem PUCCH umfasst.

**3.** Das Verfahren nach Anspruch 1, wobei die unbekannte PUCCH-SZelle mit einem gültigen Zeitvorlauf, TA, oder einem ungültigen TA assoziiert ist.

**4.** Das Verfahren nach Anspruch 3, wobei für den Fall, dass die unbekannte PUCCH-SZelle mit dem ungültigen TA assoziiert ist, das Verfahren ferner umfasst:

Empfangen, durch das UE (102), eines PDCCH-Befehls von dem Netzwerkknoten (101); und
Übertragen, durch das UE (102), von Informationen in Bezug auf eine Übertragung über einen physischen Direktzugriffskanal, PRACH, an den anderen Netzwerkknoten (103), der der unbekannten PUCCH-SZelle zugeordnet ist.

**5.** Das Verfahren nach Anspruch 1, wobei die unbekannte PUCCH-SZelle in einem Band eines Frequenzbereichs 1, FR1, oder in einem Band eines Frequenzbereichs 2, FR2, liegt.

**6.** Das Verfahren nach Anspruch 1, wobei, wenn der L1-Bericht übertragen wird, der L1-Bericht eine L1-Messung der empfangenen Referenzsignalleistung, L1-RSRP, eine L1-Messung des Signal-zu-Interferenz-plus-Rausch-Verhältnisses, L1-SINR, einen Kanalqualitätsindikator, CQI, einen Vorcodierungsmatrixindikator, PMI, einen Rangindikator, RI, oder einen Ressourcenindikator eines Referenzsignals für Kanalzustandsinformationen, CSI-RS-Ressourcenindikator, CRI, umfasst; oder wobei der L1-Bericht einen aperiodischen L1-Bericht oder einen semi-persistenten L1-Bericht umfasst.

**7.** Das Verfahren nach Anspruch 1, wobei, wenn der L3-Bericht übertragen wird, der L3-Bericht einen L3-RSRP-Messbericht oder einen Synchronisationssignal-SINR-, SS-SINR-, Messbericht umfasst; oder wobei eine Aktivierungszeit der unbekannten PUCCH-SZelle eine L3-RSRP-Verzögerung umfasst.

**8.** Ein Benutzergerät (102), UE, umfassend:

einen Empfänger (132), der einen Aktivierungsbefehl für eine physische Uplink-Steuerkanal-, PUCCH-, sekun-

däre Zelle, SZelle, für eine unbekannte PUCCH-SZelle von einem Netzwerkknoten (101) empfängt, und der Messreferenzsignale, RSs, für die unbekannte Ziel-PUCCH-SZelle von einem anderen Netzwerkknoten (103), der der unbekannten Ziel-PUCCH-SZelle zugeordnet ist, empfängt;
eine Messschaltung (141), die eine Messung (205, 305) basierend auf den Mess-RSs durchführt, um einen Layer-1-, L1-, Bericht oder einen Layer-3-, L3-, Bericht für die unbekannte Ziel-PUCCH-SZelle zu erzeugen; und einen Sender (132), der den L1-Bericht oder den L3-Bericht für die unbekannte PUCCH-SZelle an den Netzwerkknoten (101) durch einen Uplink-Kanal auf einer speziellen Zelle, SpZelle, oder einer SZelle überträgt, bevor die unbekannte PUCCH-SZelle aktiviert wird, und der den L1-Bericht oder den L3-Bericht für die unbekannte Ziel-PUCCH-SZelle an den anderen Netzwerkknoten (103), der der unbekannten Ziel-PUCCH-SZelle zugeordnet ist, durch die unbekannte Ziel-PUCCH-SZelle überträgt,
wobei die SpZelle mindestens eines von einer primären Zelle, PZelle, und einer primären sekundären Zelle, PSZelle, umfasst.

**9.** Das UE (102) nach Anspruch 8, wobei der Uplink-Kanal mindestens eines von einem geteilt genutzten physischen Uplink-Kanal, PUSCH, oder einem PUCCH umfasst.

**10.** Das UE (102) nach Anspruch 8, wobei die unbekannte PUCCH-SZelle in einem Band eines Frequenzbereichs 1, FR1, oder in einem Band eines Frequenzbereichs 2, FR2, liegt.

**11.** Das UE (102) nach Anspruch 8, wobei die unbekannte PUCCH-SZelle mit einem gültigen Zeitvorlauf, TA, oder einem ungültigen TA assoziiert ist.

**12.** Das UE (102) nach Anspruch 11, wobei für den Fall, dass die unbekannte PUCCH-SZelle mit dem ungültigen TA assoziiert ist, der Empfänger (132) einen PDCCH-Befehl von dem Netzwerkknoten (101) empfängt und der Sender (132) Informationen in Bezug auf eine Übertragung über einen physischen Direktzugriffskanal, PRACH, an den anderen Netzwerkknoten (103), der der unbekannten PUCCH-SZelle zugeordnet ist, überträgt.

**13.** Das UE (102) nach Anspruch 8, wenn der L1-Bericht übertragen wird, der L1-Bericht eine L1-Messung der empfangenen Referenzsignalleistung, L1-RSRP, eine L1-Messung des Signal-zu-Interferenz-plus-Rausch-Verhältnisses, L1-SINR, einen Kanalqualitätsindikator, CQI, einen Vorcodierungsmatrixindikator, PMI, einen Rangindikator, RI, oder einen CSI-RS-Ressourcenindikator, CRI, umfasst; oder wobei der L1-Bericht einen aperiodischen L1-Bericht oder einen semi-persistenten L1-Bericht umfasst.

**14.** Das UE (102) nach Anspruch 8, wobei, wenn der L3-Bericht übertragen wird, der L3-Bericht einen L3-RSRP-Messbericht oder einen Synchronisationssignal-SINR-, SS-SINR-, Messbericht umfasst; oder wobei eine Aktivierungszeit der unbekannten PUCCH-SZelle eine L3-RSRP-Verzögerung umfasst.

## Revendications

**1.** Un procédé, comprenant :

la réception (201, 301), par un équipement utilisateur (102), UE, d'une commande d'activation de cellule secondaire, SCell, de canal de commande de liaison montante physique, PUCCH-SCell, pour une cellule secondaire PUCCH inconnue à partir d'un nœud de réseau (101) ;
la réception (204, 304), par l'UE (102), de signaux de référence de mesure, RSs, pour la cellule secondaire PUCCH cible inconnue à partir d'un autre nœud de réseau (103) associé à la cellule secondaire PUCCH cible inconnue, et la réalisation (205, 305) d'une mesure sur la base des RSs de mesure pour générer un rapport de couche 1, L1, ou un rapport de couche 3, L3, pour la cellule secondaire PUCCH cible inconnue ;
la transmission (206, 306), par l'UE (102), du rapport L1 ou du rapport L3 pour la cellule secondaire PUCCH inconnue au nœud de réseau (101) par l'intermédiaire d'un canal de liaison montante sur une cellule spéciale, SpCell, ou sur une cellule secondaire, SCell, avant que la cellule secondaire PUCCH inconnue ne soit activée ; et
la transmission (208, 311), par l'UE (102), du rapport L1 ou du rapport L3 pour la cellule secondaire PUCCH cible inconnue à l'autre nœud de réseau (103) associé à la cellule secondaire PUCCH cible inconnue par l'intermédiaire de la cellule secondaire PUCCH cible inconnue,
dans lequel la SpCell comprend au moins l'une d'une cellule primaire, PCell, et d'une cellule secondaire primaire, PSCell.

**2.** Le procédé selon la revendication 1, dans lequel le canal de liaison montante comprend au moins l'un d'un canal physique partagé de liaison montante, PUSCH, ou d'un PUCCH.

**3.** Le procédé selon la revendication 1, dans lequel la cellule secondaire PUCCH inconnue est associée à une avance temporelle, TA, valide ou à une TA invalide.

**4.** Le procédé selon la revendication 3, dans lequel, dans le cas où la cellule secondaire PUCCH inconnue est associée à la TA invalide, le procédé comprend en outre :

la réception, par l'UE (102), d'une commande PDCCH à partir du nœud de réseau (101) ; et
la transmission, par l'UE (102), d'informations relatives à une transmission sur un canal physique d'accès aléatoire, PRACH, à l'autre nœud de réseau (103) associé à la cellule secondaire PUCCH inconnue.

**5.** Le procédé selon la revendication 1, dans lequel la cellule secondaire PUCCH inconnue est dans une bande de fréquence 1, FR1, ou dans une bande de fréquence 2, FR2.

**6.** Le procédé selon la revendication 1, dans lequel, si le rapport L1 est transmis, le rapport L1 comprend une mesure de puissance reçue de signal de référence L1, L1-RSRP, une mesure de rapport signal sur interférence plus bruit L1, L1-SINR, un indicateur de qualité de canal, CQI, un indicateur de matrice de précodage, PMI, un indicateur de rang, RI, ou un indicateur de ressource de signal de référence d'informations d'état de canal, CSI-RS, CRI ; ou dans lequel le rapport L1 comprend un rapport L1 apériodique ou un rapport L1 semi-persistant.

**7.** Le procédé selon la revendication 1, dans lequel, si le rapport L3 est transmis, le rapport L3 comprend un rapport de mesure L3-RSRP ou un rapport de mesure de SINR de signal de synchronisation, SS-SINR ; ou dans lequel un temps d'activation de la cellule secondaire PUCCH inconnue comprend un retard L3-RSRP.

**8.** Un équipement utilisateur (102), UE, comprenant :

un récepteur (132), recevant une commande d'activation de cellule secondaire de canal de commande de liaison montante physique, PUCCH-SCell, pour une cellule secondaire PUCCH inconnue à partir d'un nœud de réseau (101), et recevant des signaux de référence de mesure, RSs, pour la cellule secondaire PUCCH cible inconnue à partir d'un autre nœud de réseau (103) associé à la cellule secondaire PUCCH cible inconnue ;
un circuit de mesure (141), réalisant (205, 305) une mesure sur la base des RSs de mesure pour générer un rapport de couche 1, L1, ou un rapport de couche 3, L3, pour la cellule secondaire PUCCH cible inconnue ; et
un émetteur (132), transmettant le rapport L1 ou le rapport L3 pour la cellule secondaire PUCCH inconnue au nœud de réseau (101) par l'intermédiaire d'un canal de liaison montante sur une cellule spéciale, SpCell, ou une cellule secondaire, SCell, avant que la cellule secondaire PUCCH inconnue ne soit activée, et transmettant le rapport L1 ou le rapport L3 pour la cellule secondaire PUCCH cible inconnue à l'autre nœud de réseau (103) associé à la cellule secondaire PUCCH cible inconnue par l'intermédiaire de la cellule secondaire PUCCH cible inconnue,
dans lequel la SpCell comprend au moins l'une d'une cellule primaire, PCell, et d'une cellule secondaire primaire, PSCell.

**9.** L'UE (102) selon la revendication 8, dans lequel le canal de liaison montante comprend au moins l'un d'un canal physique partagé de liaison montante, PUSCH, ou d'un PUCCH.

**10.** L'UE (102) selon la revendication 8, dans lequel la cellule secondaire PUCCH inconnue est dans une bande de fréquence 1, FR1, ou dans une bande de fréquence 2, FR2.

**11.** L'UE (102) selon la revendication 8, dans lequel la cellule secondaire PUCCH inconnue est associée à une avance temporelle, TA, valide ou à une TA invalide.

**12.** L'UE (102) selon la revendication 11, dans lequel, dans le cas où la cellule secondaire PUCCH inconnue est associée à la TA invalide, le récepteur (132) reçoit une commande PDCCH à partir du nœud de réseau (101) et l'émetteur (132) transmet des informations relatives à une transmission sur un canal physique d'accès aléatoire, PRACH, à l'autre nœud de réseau (103) associé à la cellule secondaire PUCCH inconnue.

**13.** L'UE (102) selon la revendication 8, dans lequel, si le rapport L1 est transmis, le rapport L1 comprend une mesure de

puissance reçue de signal de référence L1, L1-RSRP, une mesure de rapport signal sur interférence plus bruit L1, L1-SINR, un indicateur de qualité de canal, CQI, un indicateur de matrice de précodage, PMI, un indicateur de rang, RI, ou un indicateur de ressource de signal de référence d'informations d'état de canal, CSI-RS, CRI ; ou dans lequel le rapport L1 comprend un rapport L1 apériodique ou un rapport L1 semi-persistant.

**14.** L'UE (102) selon la revendication 8, dans lequel, si le rapport L3 est transmis, le rapport L3 comprend un rapport de mesure L3-RSRP ou un rapport de mesure de SINR de signal de synchronisation, SS-SINR ; ou dans lequel un temps d'activation de la cellule secondaire PUCCH inconnue comprend un retard L3-RSRP.

131
111
102
101
140
120
MEASURING CIRCUIT 141
REPORT CIRCUIT 142
132
TRANSCEIVER
133
PROCESSOR
134
MEMORY
135
PROGRAM
112
TRANSCEIVER
113
PROCESSOR
114
MEMORY
115
PROGRAM
ALLOCATION CIRCUIT 121
CONFIGURATION CIRCUIT 122

FIG. 1

102
101
103
UE
Network node
Network node
PUCCH SCell activation command
201
MAC CE parsing and CRC check
202
ACK/NACK transmission
203
Measurement RSs
204
measurement and report preparation
205
L1 report or L3 report
206
DL TCI state and UL spatial relation indications
207
L1 report or L3 report on target PUCCH SCell
208
activation preparation
activation
activation completion

FIG. 2

102
101
103
UE
Network node
Network node
PUCCH SCell activation command
301
MAC CE parsing and CRC check
302
ACK/NACK transmission
303
Measurement RSs
304
measurement and report preparation
305
L1 report or L3 report
306
DL TCI state and UL spatial relation indications
307
DCI for PRACH preparation
308
PDCCH order
309
PRACH transmission
310
L1 report or L3 report on target PUCCH SCell
311
activation preparation
activation
activation completion

FIG. 3

RECEIVE PUCCH SCELL ACTIVATION COMMAND FOR AN UNKNOWN TARGET PUCCH SCELL FROM A NETWORK CODE
401
TRANSMIT A L1 REPORT OR A L3 REPORT FOR THE UNKNOWN TARGET PUCCH SCELL TO THE NETWORK NODE THROUGH AN UPLINK CHANNEL ON A SPCELL OR A SCELL BEFORE THE UNKNOWN TARGET PUCCH SCELL IS ACTIVATED
402

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016338039 A1


### Non-patent literature cited in the description


- **VIVO**. On PUCCH SCell activation and deactivation. *3GPP DRAFT, R4-2109617, 3GPP TSG-RAN WG4 Meeting #99-e*, 19 May 2021
- Email discussion summary for [99-e] [226] NR_RRM_enh2_3. *3GPP DRAFT, R4-2108150, 3GPP TSG-RAN WG4 Meeting #99-e*, 19 May 2021
- Email discussion summary for [99-e] [226] NR_RRM_enh2_3. *3GPP DRAFT, R4-2108398, 3GPP TSG-RAN WG4 Meeting #99-e*, 19 May 2021